# FASCICULE DE BREVET EUROPEEN

(11) **EP 4 543 634 B1**
(45) Date de publication et mention de la délivrance du brevet: **10.06.2026**
(21) Numéro de dépôt: 23732638.4
(22) Date de dépôt: 21.06.2023
(51) Int. Cl.: B25J 9/12, B25J 13/08, B25J 15/00, B25J 15/06, B25J 19/00, B25J 19/02

(54) **PREHENSEUR, SYSTEME ET PROCEDE DE PALETTISATION / DEPALETTISATION**
PALETTIERUNGS- UND DEPALETTIERUNGSGREIFER, SYSTEM UND VERFAHREN
PALLETISATION AND DEPALLETISATION GRIPPER, SYSTEM AND METHOD

(30) Priorité: 23.06.2022 FR 2206250
(43) Date de publication de la demande: 30.04.2025
(73) Titulaire: FIVES SYLEPS, 56100 Lorient (FR)
(72) Inventeur: BOISNARD, Thierry, 56100 Lorient (FR); COCAN, Mircea, Lorient 56100 (FR)
(74) Mandataire: Novagraaf Group
(86) Numéro de dépôt international: PCT/EP2023/066801
(87) Numéro de publication internationale: WO 2023/247629

(56) Documents cités:
- CN-A- 112 091 943
- DE-A1- 102014 209 904
- IT-A1- 201800 005 679
- JP-A- 2004 195 637
- JP-B1- 7 048 934
- US-A1- 2021 094 766
- US-B1- 6 213 709
- US-B2- 10 875 192

## Description

### Domaine de l'invention

L'invention appartient au domaine de l'intralogistique et porte sur un préhenseur et un système de palettisation/dépalettisation. Il porte également sur un procédé automatisé de déchargement de paquets utilisant un tel système.

### Etat de la technique

Les systèmes de palettisation/dépalettisation connus mettent en œuvre un robot pour déposer ou enlever, dans un certain ordre, un ensemble de paquets.

Un paquet (ou colis) peut être tout type d'objet de forme régulière susceptible d'être transporté dans un contenant, par exemple en forme d'une boite cubique ou cuboïde ou encore sous forme d'une marchandise, par exemple un ensemble de sacs ou de bouteilles soudés les uns aux autres par un film plastique.

Un contenant peut être, par exemple, une palette, un chariot du type appelé « roll » en anglais ou une caisse.

Dans les systèmes de dépalettisation connus, une palette comprenant un ensemble de paquets arrangés en couches superposées est amenée au poste de déchargement. Un robot muni d'un préhenseur est configuré pour venir au contact d'un paquet pour le prendre par aspiration puis le déplace jusqu'à une zone de réception tel qu'un convoyeur, et le dépose. Le préhenseur peut également prendre plus d'un article à la fois. Cette opération est souvent délicate lorsque les paquets sont de tailles variables et lorsque le système ne connait pas d'avance les dimensions des paquets à décharger. Des moyens de vision et de calculs associés estiment le temps nécessaire à la prise et à la dépose des paquets afin de limiter le risque de chocs.

Cependant, lorsqu'un paquet n'est pas présenté dans une position ordinaire, par exemple incliné lors du chargement ou bien suite au déplacement du conteneur, il existe un risque que le paquet soit abimé si le préhenseur utilisé est un préhenseur ordinaire. Dans ce cas, le processus peut être interrompu afin de prendre manuellement le paquet incliné ou de le remettre dans une position ordinaire permettant au robot de poursuivre le chargement ou le déchargement.

Il est donc nécessaire de trouver une solution automatique pour éviter de prendre le risque d'abimer de tell paquet arrivant dans une position incliné ou de perdre un temps précieux à chaque fois que le système détecte un paquet présenté dans une position non ordinaire.

La présente invention a donc pour objectif de proposer un système de palettisation et/ou de dépalettisation permettant de régler le problème décrit ci-dessus.

Les documents JP7048934B1et DE102014209904A1 divulguent des préhenseurs multi-ventouses, dont chaque ventouse peut actionner l'aspiration individuellement et est placée sur un axe linéaire actionné. Le document CN112091943A divulgue un préhenseur avec une seule ventouse montée sur un axe linéaire actionné par un moteur annulaire dans lequel passe l'axe linéaire. Le document US2021/094766A1 divulgue un préhenseur multi-ventouses, dont chaque ventouse peut actionner l'aspiration individuellement et est placée sur un axe linéaire passif et une articulation de type rotule, ce qui permet d'attraper des colis dont la surface de préhension n'est pas horizontale.

### Résumé de l'invention

A cet effet, selon un premier aspect, l'invention porte sur un préhenseur destiné à être monté sur un robot d'un système de chargement/déchargement pour saisir lorsqu'il est actionné un paquet à déplacer depuis ou vers un contenant, ledit préhenseur comprenant un châssis portant une pluralité de dispositifs de préhension ayant chacun une première extrémité fixée au châssis et une deuxième extrémité portant une ventouse, ladite ventouse étant reliée à un dispositif de dépression.

Selon l'invention :
- chaque ventouse est actionnable individuellement pour saisir le paquet par aspiration, et
- un des dispositifs de préhension comprend un axe linéaire mobile par rapport au châssis et apte à déplacer la ventouse dudit dispositif de préhension entre une position reculée et une position avancée.

Avantageusement, deux dispositifs de préhension ou plus comprennent un axe linéaire mobile respectif. Dans certains modes de réalisation, chaque dispositif de préhension comprend un axe linéaire mobile.

Grâce au déplacement d'une ou plusieurs ventouses, il devient possible d'adapter la position de prise du préhenseur à la position d'un paquet incliné.

Avantageusement, l'axe linéaire peut être un cylindre (appelé aussi plongeur) creux, par exemple sous forme d'une vis à billes, présentant une extrémité supérieure reliée au dispositif de dépression et une extrémité inférieure portant la ventouse.

Le cylindre creux permet de réaliser la liaison fluidique avec le dispositif de dépression sans nécessiter des tuyauteries supplémentaires, réduisant ainsi l'encombrement et la maintenance et augmentant la robustesse.

Avantageusement, le dispositif de préhension comprend une rotule reliant la ventouse audit cylindre.

Grâce à la rotule la ventouse peut s'adapter à l'inclinaison du paquet et assurer donc une bonne prise par aspiration.

Avantageusement, le dispositif de préhension comprend un moyen de redressement configuré pour coopérer avec la rotule pour rétablir la position de la ventouse par rapport à l'axe linéaire. Ceci permet de redresser le colis dans une position facilitant son dépôt sur le contenant ou la zone de réception. Cela permet aussi d'avoir des ventouses avec une orientation régulière, par exemple horizontale, au moins dans la position reculée.

Selon l'invention, le dispositif de préhension comprend un moteur annulaire dans lequel passe l'axe linéaire, ledit moteur étant configuré pour déplacer ledit axe linéaire pour porter la ventouse de la position reculée à la position avancée et inversement.

Cela permet d'avoir un préhenseur compact. En effet, il ne nécessite pas de transmission par courroie, ni par engrenages, ce qui réduit considérablement l'espace occupé par chaque dispositif de préhension. Avantageusement, le dispositif de préhension peut comprendre un codeur configuré pour mesurer la position de l'axe linéaire et la transmettre à un moyen de contrôle externe au préhenseur.

Ceci permet au moyen de contrôle de déduire la position de la ventouse dans l'espace et contrôler son déplacement par les moyens de déplacement, par exemple par le moteur annulaire.

Avantageusement, le dispositif de préhension peut comprendre un frein apte à être piloté pour bloquer l'axe linéaire selon certaines positions de la ventouse. Le frein peut par exemple être activé pour bloquer l'axe linéaire lorsque le moteur n'est pas alimenté électriquement pour économiser l'énergie et éviter une surchauffe du moteur. Le frein permet donc de sécuriser le dispositif de préhension ainsi que l'intégrité des colis déplacés.

Le moyen de contrôle comprend par exemple un variateur apte à piloter le moteur et à recevoir les informations du codeur et également à commander le frein.

Avantageusement, la pluralité des dispositifs de préhension peut être agencée selon deux rangées parallèles mobiles l'une par rapport à l'autre de manière que la distance entre elle puisse être variée selon la dimension du paquet à saisir.

Cela permet d'adapter la prise par le préhenseur selon une première direction du paquet, par exemple pour l'adapter à la largeur du paquet. Cela permet aussi d'écarter les dispositifs de la deuxième rangée si la prise peut se faire avec la première rangée seule.

Avantageusement, une rangée peut comprendre deux dispositifs de préhension séparés par une distance apte à être variée selon les dimensions du paquet à saisir.

Cela permet d'adapter la prise par le préhenseur selon une deuxième direction, par exemple pour l'adapter à la longueur du paquet. Cela permet aussi d'écarter les dispositifs de la même rangée qui ne participent à la prise du paquet.

L'invention porte également sur un système de chargement ou de déchargement comprenant un préhenseur tel que décrit précédemment.

Avantageusement, le système de chargement/déchargement selon l'invention tel que décrit ci-dessus peut comprendre en outre un moyen de vision aptes à détecter un colis incliné et des moyens de contrôle aptes à contrôler le déplacement d'au moins une ventouse selon l'inclinaison du paquet déduite d'une information transmise par le moyen de vision.

L'invention porte aussi sur un procédé de dépalettisation ou de palettisation dans lequel on décharge ou on charge des paquets d'un contenant en utilisant un système de déchargement ou de chargement décrit ci-dessus.

### Brève description des figures

D'autres particularités et avantages de l'invention apparaîtront dans la description ci-après en relation avec les dessins annexés, donnés à titre d'exemples non limitatifs, dans lesquelles :
[Fig.1] la figure 1 représente un robot muni d'un préhenseur selon un premier exemple de réalisation de l'invention ;
[Fig.2] la figure 2 représente un robot muni d'un préhenseur selon un deuxième mode de réalisation ;
[Fig.3] la figure 3 représente un dispositif de saisie selon la figure 2 en position reculée et en position avancée ;
[Fig.4] la figure 4 représente une vue de coupe de la zone IV montrée sur la figure 3.

### Description détaillée

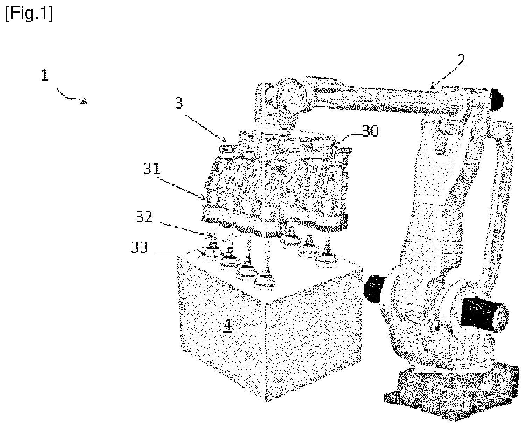

La figure 1 représente partiellement un système 1 de chargement ou de déchargement de paquets 4 selon un premier exemple de réalisation de l'invention. Le système 1 comprend un robot 2 sur lequel est monté un préhenseur 3 selon l'invention.

Le contenant à partir duquel le paquet 4 est pris n'est pas représenté, mais il peut être par exemple une palette ou un chariot du type appelé « roll » en anglais. Un tel contenant peut comprendre un ensemble de paquets 4, par exemple des colis, de formes et dimensions hétérogènes. Ils peuvent aussi être partiellement ou totalement homogènes. Certains des paquets 4 sont présentés inclinés, par exemple, suite à leur transport.

Dans cette situation, un système de palettisation/dépalettisation du type connu de l'état de la technique serait arrêté pour permettre une prise manuelle des colis inclinés ce qui constitut une perte de temps considérable.

Pour résoudre ce problème, le préhenseur 3 selon l'invention tel que montré par la figure 1 comprend une pluralité de dispositifs de préhension 31 portés par un châssis 30, à titre d'exemple le nombre de dispositifs de préhension 31 peut être de 8 comme sur la figure 1, mais le nombre peut être différent dans exemples de réalisation non illustrés.

Chaque dispositif 31 comprend une ventouse 33 reliée à un dispositif de dépression non montré sur la figure 1. La ventouse 33 sert à saisir par aspiration le colis 4 ou une partie de celui-ci comme cela se voit sur la figure 1. Pour permettre la prise d'un colis incliné comme c'est le cas pour le colis 4, les dispositifs de préhension 31 ont des axes linéaires 32 mobiles par rapport au châssis 30. Par exemple, sur la figure 1 les 8 dispositifs de préhension 31 comprennent chacun un axe linéaire 32 mobile pouvant déplacer la ventouse 33 respective selon l'inclinaison du colis 4.

L'axe linéaire, peut être sous forme d'un tube ou cylindre agencé de manière à coulisser pour déplacer la ventouse 33 selon une distance donnée par rapport au châssis 30.

Pour piloter le préhenseur 3 et les dispositifs de préhension 31, le système 1 peut par exemple comprendre des moyens de vision pouvant détecter l'inclinaison du paquet 4. Le système peut également comprendre des moyens de contrôle, par exemple un logiciel apte à traiter l'information reçue des moyens de vision et à piloter le déplacement des ventouses 33 selon l'inclinaison déterminée. Le logiciel peut également contrôler le déplacement du colis 4 après la saisie par les ventouses.

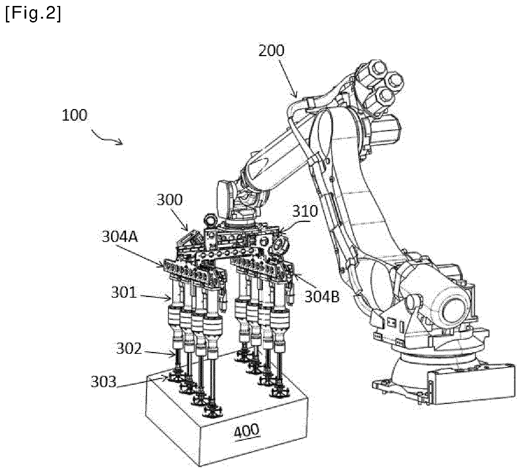

La figure 2 représente un deuxième exemple de réalisation dans lequel le système de chargement/déchargement 100 comprend un robot 200 sur lequel est monté un préhenseur 300 comprenant un châssis 310 qui porte des dispositifs de préhension 301.

Le fonctionnement de ce système de chargement/déchargement est similaire au système de la figure 1.

Comme pour le système 1 décrit précédemment, le système 100 peut comprendre des moyens de vision pouvant détecter l'inclinaison du paquet 400. Le système 100 peut également comprendre des moyens de contrôle, par exemple un logiciel apte à traiter l'information reçue des moyens de vision et à piloter le déplacement des ventouses 303 selon l'inclinaison déterminée. Le logiciel peut également contrôler le déplacement du colis après la saisie par les ventouses.

La particularité du système 100 montré par la figure 2 est que le préhenseur 300 est beaucoup plus compact grâce à la forme des dispositifs de préhension 301. Deux rampes 304A, B sont fixées au châssis 310, portant chacune une pluralité, par exemple 4, de dispositifs de préhension 301.

Avantageusement, les deux rampes 304A, B peuvent être mobiles l'une par rapport à l'autre de manière que la distance entre elle puisse être variée selon la dimension du paquet 400 à saisir.

Avantageusement, au sein de la même rangée, au moins deux dispositifs de préhension 301 sont séparés par une distance apte à être variée selon les dimensions du paquet à saisir. Par exemple, la rampe 304A peut être pilotée de sorte que la distance entre chaque deux dispositifs de préhension 301 puisse être écartée ou resserrée.

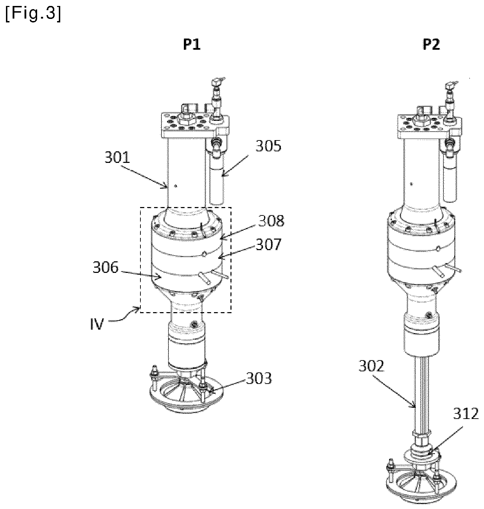

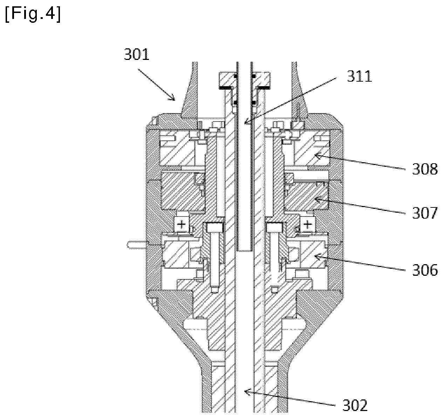

La figure 3 montre un dispositif 301 du préhenseur 300 en position reculée P1 et en position avancée P2. La figure 4 représente une vue de coupe de la zone IV montrée sur la figure 3.

Comme cela se voit sur les dessins, le dispositif de préhension 301 est compacte et globalement cylindrique. Dans la partie supérieure est agencée une tige creuse 311 reliée au bloque de dépression 305 (appelé bloc venturi), le tube assurant la liaison n'est pas montré sur la figure 3. Dans la partie inférieure un axe linéaire sous forme d'un cylindre 302 creux pouvant coulisser par rapport au tube 311 sans perte d'étanchéité. Le cylindre 302 (appelé aussi plongeur) est par exemple une vis à billes. L'axe 302 porte une ventouse 303 en partie inférieur. De manière avantageuse, la ventouse 303 peut être reliée au cylindre 302 par une rotule 312. Cela permet d'adapter la position de la ventouse à l'inclinaison du colis 400.

Une telle rotule peut aussi être associé au mode de réalisation de la figure 1.

Dans la partie centrale, le dispositif de préhension 301 comprend un moteur annulaire 306 dans lequel passe l'axe linéaire 302 (qui est dans l'exemple une vis à bille). Le moteur peut être piloté pour déplacer l'axe 302 pour porter la ventouse de la position P1 à la position P2 et inversement.

Ce moteur présente l'avantage, par rapport à l'exemple précédent qu'il ne nécessite pas de transmission par courroie, ni par engrenages, ce qui réduit considérablement l'espace occupé par chaque dispositif de préhension 301. Il en résulte que grâce à ce moteur le préhenseur est très compacte.

Le dispositif de préhension 301 peut comprendre aussi un codeur 307 et un frein 308, qui sont également annulaires dans l'exemple des figure 2 à 4. Le codeur permet de mesurer à tout moment la position de l'axe linéaire 302 et la transmettre au moyen de contrôle. Le frein 308 peut être piloté pour bloquer l'axe linéaire selon certaines positions de la ventouse 303.

Le moyen de contrôle comprend par exemple un variateur apte à piloter le moteur et à recevoir les informations du codeur et également à commander le frein.

Un cycle de chargement ou de déchargement mettant en œuvre le système conforme à la description ci-dessus, peut comprendre tout ou partie des étapes suivantes :
Un contenant, par exemple une palette, est amené à un poste de chargement/déchargement par un moyen de convoyage.

Le contenant est optionnellement placé sur une table élévatrice.

Un moyen de détection détecte les colis situés en partie supérieur et transmis les images au système de contrôle ;
Le système de contrôle détermine le colis le plus haut qui sera pris en premier par le préhenseur ;
Le dispositif de contrôle peut sélectionner le nombre de dispositifs de préhension qui participent à la prise du colis selon les dimensions de ce dernier.

L'écartement entre dispositifs de préhensions 301 peut être ajust selon la taille du colis et le nombre de dispositifs de préhension 301 participants ;
Si le colis le plus haut est incliné, le moyen de contrôle commande le moteur d'un ou plusieurs dispositifs de préhensions 31, 301 pour déplacer la ou les ventouses respectives conformément à l'inclinaison du colis ;
Le préhenseur descend pour saisir le colis, puis remonte, les ventouses sont déplacées à la position reculée P1 de sorte que le colis soit horizontal et prêt à être déplacé jusqu'à la zone de réception.

Ces étapes sont renouvelées pour tous les paquets.

## Revendications

1. Préhenseur (3 ; 300) destiné à être monté sur un robot (2 ; 200) d'un système de chargement/déchargement pour saisir lorsqu'il est actionné un paquet (4 ; 400) à déplacer depuis ou vers un contenant, ledit préhenseur (3 ; 300) comprenant un châssis (30 ; 310) portant une pluralité de dispositifs de préhension (31 ; 301) ayant chacun une première extrémité fixée au châssis (30 ; 310) et une deuxième extrémité portant une ventouse (33 ; 303) ladite ventouse étant reliée à un dispositif de dépression (305), dans lequel :
- chaque ventouse (33 ; 303) est actionnable individuellement pour saisir le paquet (4 ; 400) par aspiration, et
- un des dispositifs de préhension (31 ; 301) comprend un axe linéaire (32 ; 302) mobile par rapport au châssis et apte à déplacer la ventouse (33 ; 303) dudit dispositif de préhension (31 ; 301) entre une position reculée (P1) et une position avancée (P2),
**caractérisé en ce que** le dispositif de préhension (301) comprend un moteur (306) annulaire dans lequel passe l'axe linéaire (302), ledit moteur (306) étant configuré pour déplacer ledit axe linéaire (302) pour porter la ventouse (303) de la position reculée (P1) à la position avancée (P2) et inversement.

2. Préhenseur (3 ; 300) selon la revendication 1 dans lequel l'axe linéaire (302) est un cylindre creux présentant une extrémité supérieure reliée au dispositif de dépression (305) et une extrémité inférieure portant la ventouse (33 ; 303).

3. Préhenseur (3 ; 300) selon la revendication 2 dans lequel le dispositif de préhension comprend une rotule (312) reliant la ventouse audit cylindre (302).

4. Préhenseur (300) selon la revendication précédente dans lequel le dispositif de préhension comprend un moyen de redressement configuré pour coopérer avec la rotule (312) pour rétablir la position de la ventouse (303) par rapport à l'axe linéaire.

5. Préhenseur (3 ; 300) selon l'une des revendications précédentes dans lequel le dispositif de préhension (31 ; 301) comprend un codeur (307) configuré pour mesurer la position de l'axe linéaire et la transmettre à un moyen de contrôle externe au préhenseur.

6. Préhenseur (3 ; 300) selon l'une des revendications précédentes dans lequel le dispositif de préhension (31 ; 301) comprend un frein (308) apte à être piloté pour bloquer l'axe linéaire (32 ; 302) selon certaines positions de la ventouse (33 ; 303).

7. Préhenseur (3 ; 300) selon l'une des revendications précédentes dans lequel la pluralité des dispositifs de préhension (31, 301) est agencée selon deux rangées parallèles mobiles l'une par rapport à l'autre de manière que la distance entre elle puisse être variée selon la dimension du paquet (4 ; 400) à saisir.

8. Préhenseur (3 ; 300) selon la revendication précédente dans lequel une rangée comprend deux dispositifs de préhension (31, 301) séparés par une distance apte à être variée selon les dimensions du paquet (4 ; 400) à saisir.

9. Système (1 ; 100) de chargement ou de déchargement comprenant un préhenseur (3 ; 300) selon l'une des revendications précédentes.

10. Système (1 ; 100) de déchargement ou de chargement selon la revendication précédente comprenant en outre un moyen de vision apte à détecter un colis (4 ; 400) incliné et des moyens de contrôle aptes à contrôler le déplacement d'au moins une ventouse (33 ; 303) selon une inclinaison dudit paquet (4 ; 400) déduite d'une information transmise par le moyen de vision.

11. Procédé de dépalettisation ou de palettisation dans lequel on décharge ou on charge des paquets (4 ; 400) d'un contenant en utilisant un système de déchargement ou de chargement (1 ; 100) selon l'une des revendications 9 ou 10.

## Patentansprüche

1. Greifer (3; 300), der dazu bestimmt ist, an einem Roboter (2; 200) eines Lade-/Entladesystems montiert zu werden, um bei Betätigung ein Paket (4; 400) zu ergreifen, das von oder zu einem Behälter zu bewegen ist, wobei der Greifer (3; 300) ein Gestell (30; 310) umfasst, das eine Vielzahl von Greifvorrichtungen (31; 301) trägt, die jeweils ein erstes Ende aufweisen, das am Gestell (30; 310) befestigt ist, und ein zweites Ende, das einen Saugnapf (33; 303) trägt, wobei der Saugnapf mit einer Unterdruckvorrichtung (305) verbunden ist, wobei:
- jeder Saugnapf (33; 303) individuell zu betätigen ist, um das Paket (4; 400) durch Ansaugen zu ergreifen, und
- eine der Greifvorrichtungen (31; 301) eine lineare Achse (32; 302) umfasst, die beweglich in Bezug auf das Gestell ist und geeignet ist, den Saugnapf (33; 303) der besagten Greifvorrichtung (31; 301) zwischen einer zurückgezogenen Position (P1) und einer vorgeschobenen Position (P2) zu bewegen,
**dadurch gekennzeichnet, dass** die Greifvorrichtung (301) einen ringförmigen Motor (306) umfasst, durch den die lineare Achse (302) verläuft, wobei der Motor (306) dazu konfiguriert ist, die lineare Achse (302) zu bewegen, um den Saugnapf (303) von der zurückgezogenen Position (P1) in die vorgeschobene Position (P2) und umgekehrt zu bringen.

2. Greifer (3; 300) nach Anspruch 1, wobei die lineare Achse (302) ein Hohlzylinder ist, der ein oberes Ende aufweist, das mit der Unterdruckvorrichtung (305) verbunden ist, und ein unteres Ende, das den Saugnapf (33; 303) trägt.

3. Greifer (3; 300) nach Anspruch 2, wobei die Greifvorrichtung ein Kugelgelenk (312) umfasst, das den Saugnapf mit dem Zylinder (302) verbindet.

4. Greifer (300) nach dem vorstehenden Anspruch, wobei die Greifvorrichtung ein Richtmittel umfasst, das dazu konfiguriert ist, mit dem Kugelgelenk (312) zusammenzuwirken, um die Position des Saugnapfes (303) in Bezug auf die lineare Achse wiederherzustellen.

5. Greifer (3; 300) nach einem der vorstehenden Ansprüche, wobei die Greifvorrichtung (31; 301) einen Encoder (307) umfasst, der dazu konfiguriert ist, die Position der linearen Achse zu messen und diese an ein externes Steuermittel des Greifers zu übertragen.

6. Greifer (3; 300) nach einem der vorstehenden Ansprüche, wobei die Greifvorrichtung (31; 301) eine Bremse (308) umfasst, die geeignet ist, gesteuert zu werden, um die lineare Achse (32; 302) in bestimmten Positionen des Saugnapfes (33; 303) zu blockieren.

7. Greifer (3; 300) nach einem der vorstehenden Ansprüche, wobei die Vielzahl der Greifvorrichtungen (31, 301) in zwei parallelen Reihen angeordnet ist, die relativ zueinander beweglich sind, so dass der Abstand zwischen ihnen entsprechend der Abmessung des zu greifenden Paketes (4; 400) variiert werden kann.

8. Greifer (3; 300) nach dem vorstehenden Anspruch, wobei eine Reihe zwei Greifvorrichtungen (31, 301) umfasst, die durch einen Abstand getrennt sind, der geeignet ist, entsprechend den Abmessungen des zu greifenden Paketes (4; 400) variiert zu werden.

9. System (1; 100) zum Beladen oder Entladen, umfassend einen Greifer (3; 300) nach einem der vorstehenden Ansprüche.

10. System (1; 100) zum Entladen oder Beladen nach dem vorstehenden Anspruch, das ferner ein Sichtmittel umfasst, das geeignet ist, ein geneigtes Paket (4; 400) zu erkennen, und Steuerungsmittel, die geeignet sind, die Bewegung mindestens eines Saugnapfes (33; 303) entsprechend einer Neigung des Paketes (4; 400) zu steuern, die aus einer vom Sichtmittel übertragenen Information abgeleitet wird.

11. Verfahren zum Depalettieren oder Palettieren, bei dem Pakete (4; 400) unter Verwendung eines Entlade- oder Ladesystems (1; 100) nach einem der Ansprüche 9 oder 10 aus einem Behälter entladen oder in einen Behälter beladen werden.

## Claims

1. A gripper (3; 300) intended to be mounted on a robot (2; 200) of a loading/unloading system in order to grip, when it is actuated, a package (4; 400) to be moved from or to a container, said gripper (3; 300) comprising a frame (30; 310) carrying a plurality of gripping devices (31; 301) each having a first end attached to the frame (30; 310) and a second end carrying a suction cup (33; 303) said suction cup being connected to a vacuum device (305), wherein:
- each suction cup (33; 303) can be actuated individually to grip the package (4; 400) by suction, and
- one of the gripping devices (31; 301) comprises a linear shaft (32; 302) that is movable with respect to the frame and can move the suction cup (33; 303) of said gripping device (31; 301) between a retracted position (P1) and an advanced position (P2),
**characterized in that** the gripping device (301) comprises an annular motor (306) within which the linear shaft (302) passes, said motor (306) being configured to move said linear shaft (302) to bring the suction cup (303) from the retracted position (P1) to the advanced position (P2) and vice versa.

2. The gripper (3; 300) according to claim 1, wherein the linear shaft (302) is a hollow cylinder having an upper end connected to the vacuum device (305) and a lower end carrying the suction cup (33; 303).

3. The gripper (3; 300) according to claim 2, wherein the gripping device comprises a ball-and-socket joint (312) connecting the suction cup to said cylinder (302).

4. The gripper (300) according to the preceding claim, wherein the gripping device comprises a straightening means configured so as to engage with the ball-and-socket joint (312) to restore the position of the suction cup (303) relative to the linear shaft.

5. The gripper (3; 300) according to any of the preceding claims, wherein the gripping device (31; 301) comprises an encoder (307) configured to measure the position of the linear shaft and transmit it to a control means external to the gripper.

6. The gripper (3; 300) according to any of the preceding claims wherein the gripping device (31; 301) comprises a brake (308) capable of being controlled to block the linear shaft (32; 302) according to certain positions of the suction cup (33; 303).

7. The gripper (3; 300) according to any of the preceding claims, wherein the plurality of gripping devices (31, 301) is arranged in two parallel rows which can be moved relative to each other so that the distance between them can be varied according to the size of the package (4; 400) to be gripped.

8. The gripper (3; 300) according to the preceding claim, wherein a row comprises two gripping devices (31, 301) separated by a distance which can be varied according to the dimensions of the package (4; 400) to be gripped.

9. A loading or unloading system (1; 100) comprising a gripper (3; 300) according to any of the preceding claims.

10. The unloading or loading system (1; 100) according to the preceding claim further comprising vision means able to detect a tilted parcel (4; 400) and control means able to control the movement of at least one suction cup (33; 303) according to the tilt of said parcel (4; 400) deduced from information transmitted by the vision means.

11. A depalletization or palletization method wherein the packages (4; 400) are unloaded from or loaded into a container using an unloading or loading system (1; 100) according to one of claims 9 or 10.
